# EUROPEAN PATENT APPLICATION

(11) **EP 4 224 911 A1**
(43) Date of publication of application: **09.08.2023**
(21) Application number: 22305125.1
(22) Date of filing: 04.02.2022
(51) Int. Cl.: H04W 24/02

(54) **METHOD FOR IMPROVING THE QUALITY OF SERVICE FOR AT LEAST ONE TERMINAL, CORRESPONDING COMPUTER PROGRAM PRODUCT AND DEVICE**

(71) Applicant: Commissariat à l'énergie atomique et aux énergies alternatives, 75015 Paris (FR)
(72) Inventor: CALVANESE STRINATI, Emilio, 38054 GRENOBLE CEDEX 09 (FR); MERLUZZI, Mattia, 38054 GRENOBLE CEDEX 09 (FR)
(74) Representative: Brevalex

(57) **Abstract**

A method is proposed for improving the quality of service for at least one terminal equipment connected to a radiocommunications network comprising a plurality of boosted areas. Such method comprises:
- obtaining (S200) a set of initial parameters characterizing: the configuration of the boosted areas in the radiocommunications network, the expected trajectory of the terminal equipment in a coverage area of the radiocommunications network, and the needs of the terminal equipment in term of requested services to be obtained through the connection to the radiocommunications network; and
- Determining (S240), based at least on the set of initial parameters, at least one control information allowing to improve the quality of service for the terminal equipment by acting on the trajectory of the terminal equipment and/or the operation of the radiocommunications network.

## Description

### 1. FIELD OF THE DISCLOSURE

The field of the disclosure is that of the radiocommunications networks.

More specifically, the disclosure relates to a method for improving the quality of service for a terminal equipment connected to such radiocommunications network, in particular in a dynamic environment, e.g. when the terminal equipment is moving in a coverage area of the network.

The disclosure can be of interest in any field wherein the quality of service for such terminal equipment has to be improved or has to meet a predefined target level, e.g. in cellular networks (e.g. 5G, 3GPP LTE Pro, LiFi, and "Beyond 5G" standards), LAN (for "Local Area Network"), Home-area networks, etc.

### 2. TECHNOLOGICAL BACKGROUND

Today, radiocommunications (or wireless communications) networks are quickly evolving to become more and more flexible and reconfigurable at all layers of the protocol stack, from the application, down to the radio propagation environments in which signals are transmitted and received. This will be possible in future networks, thanks to the deployment of new network entities, known as Reconfigurable Intelligent Surfaces (RIS), which are artificial surfaces made of hundreds of nearly passive (sometimes, also active) reflective elements that can be programmed and controlled to realize dynamic transformations of the radio propagation environment, both in indoor and outdoor scenarios. Thus, RIS-based communications enable Wireless-as-a-Service, as a further step towards a fully flexible and dynamic network reconfiguration. In particular, in this framework, a new concept known under the name of boosted areas arise as defined e.g. in the article by E. Calvanese Strinati et al.: "Wireless environment as a service enabled by reconfigurable intelligent surfaces: The RISE-6Gperspective," Proc. of EUCNC 6G Summit, Porto, Portugal, 8-11 June 2021. More particularly, boosted areas are portions of space in which network performance indicators (e.g. data rate, latency, reliability, secrecy, etc.) are enhanced through the aid of one or more RIS(s).

Nevertheless, boosted areas are inherently static and shaped for identified focused geographical areas. In case of radiocommunications dynamics, static association between terminal equipment and the locally deployed network RIS to form boosted areas might results in sub-optimal performance. Such dynamics can be due to the move of the terminal equipment themselves. It can also be due to other causes like the fluctuation of radio propagation conditions, momentary link blocking, variability of the requested services by the terminal equipment, etc.

There is thus a need for a solution for improving the quality of service for terminal equipment in a dynamic environment, in particular when such terminal equipment is moving in a coverage area of the considered radiocommunications network.

### 3. SUMMARY

A particular aspect of the present disclosure relates to a method for improving the quality of service for at least one terminal equipment connected to a radiocommunications network comprising a plurality of boosted areas. According to such method, an electronic device executes:
- obtaining a set of initial parameters characterizing: the configuration of the boosted areas in said radiocommunications network, the expected trajectory of the terminal equipment in a coverage area of the radiocommunications network, and the needs of the terminal equipment in term of requested services to be obtained through the connection to the radiocommunications network; and
- determining, based at least on the set of initial parameters, at least one control information allowing to improve the quality of service for the terminal equipment by acting on the trajectory of the terminal equipment and/or the operation of the radiocommunications network.

Thus, the present disclosure proposes a new and inventive solution for improving the quality of service for a terminal equipment, in particular when such terminal equipment is moving in a coverage area of the considered radiocommunications network. Such method thus allows meeting a predetermined target in term of quality of service in time and/or location varying communication conditions.

More particularly, taking into account both the configuration of the network and the expected trajectory of the terminal equipment in addition of its needs in term of requested services (e.g. data rate, energy consumption, latency, secrecy, localization precision, etc.) allows optimizing the overall quality of service, or ensuring a target level for such quality of service, for the terminal, even when moving.

In some embodiments, the control information belongs to the group comprising:
- at least one boosted path corresponding to a selection of a chaining of boosted areas that matches the trajectory of the terminal equipment;
- a service scheduling;
- at least one updated trajectory for the terminal equipment; and
- a combination of all or part of the above listed control information.

Thus, the quality of service for the terminal equipment can be optimized by acting both on the network side or on the terminal side, e.g. by acting on its trajectory.

In some embodiments, the electronic device executes: obtaining a set of dynamic parameters characterizing: effective performance of the radiocommunications network, and/or effective performance of the terminal equipment relating to the connection to the radiocommunications network. The determining at least one control information is also based on the set of dynamic parameters.

Thus, the dynamic behavior of the environment, e.g. due to the mobility of the terminal equipment, is taken into account for improving the quality of service for the terminal equipment.

In some embodiments, the obtaining a set of dynamic parameters and the determining at least one control information is executed periodically.

Thus, the changes relating to the dynamic behavior of the environment are tracked and taken into account for improving the quality of service for the terminal equipment.

In some embodiments, the electronic device is implemented in a management server connected to the radiocommunications network. The electronic device executes: sending to the terminal equipment said at least one control information.

In some embodiments wherein the electronic device is implemented in the management server, the obtaining a set of initial parameters comprises: receiving, from the terminal equipment, the expected trajectory and the requested services.

In some embodiments wherein the electronic device is implemented in the management server, the obtaining a set of dynamic parameters comprises: receiving, from the terminal equipment, the effective performance of the terminal equipment.

In some embodiments wherein the electronic device is implemented in the management server, the obtaining a set of initial parameters and/or the obtaining a set of dynamic parameters is executed for a plurality of terminal equipment connected to the radiocommunications network, delivering a corresponding plurality of sets of initial parameters and/or a corresponding plurality of sets of dynamic parameters. The at least one control information allowing to improve the quality of service for the terminal equipment is determined base at least on the plurality of sets of initial parameters and/or the plurality of sets of dynamic parameters.

Thus, the quality of service for the plurality of terminal equipment is improved through a centralized optimization taking into account for all the constraints relating to the terminal equipment of the plurality. This allows for instance achieving a predetermined quality of service for the plurality of terminal equipment.

In some embodiments wherein the electronic device is implemented in the management server, the electronic device executes: obtaining a set of additional parameters characterizing the resources of the radiocommunications network. The determining at least one control information is also based on the set of additional parameters.

The resources of the radiocommunications network comprise e.g. the available frequency bandwidth and the available access points (APs).

In some embodiments wherein the electronic device is implemented in the management server, the electronic device executes: sending, to the terminal equipment, a message representative of a grant decision for accessing the requested services. The determining at least one control information and the sending said at least one control information are executed only if the terminal equipment accepts the granted service.

Thus, in such embodiments the method is implemented only when useful for the terminal equipment. This allows for instance reducing the power consumption related to the execution of the present method.

In some embodiments, the electronic device is implemented in the terminal equipment. The obtaining a set of initial parameters comprises: receiving, from the management server, the configuration of the boosted areas.

In some embodiments wherein the electronic device is implemented in the terminal equipment, the electronic device executes:
- sending, to the management server, a request for accessing to the requested services;
- receiving, from the management server, a message representative of a grant decision for accessing the requested services.

The determining at least one control information are executed only if the terminal equipment accepts the granted service. This allows for instance reducing the power consumption related to the execution of the present method.

In some embodiments wherein the electronic device is implemented in the terminal equipment, the set of dynamic parameters are obtained locally by said terminal equipment.

Another aspect of the present disclosure relates to a computer program product comprising program code instructions for implementing the above-mentioned method for improving the quality of service for at least one terminal equipment (in any of the different embodiments discussed above), when said program is executed on a computer or a processor.

Another aspect of the present disclosure relates to a device configured for implementing all or part of the steps of the above-mentioned method for improving the quality of service for at least one terminal equipment (in any of the different embodiments discussed above). Thus, the features and advantages of this device are the same as those of the corresponding steps of said method. Therefore, they are not detailed any further.

Another aspect of the present disclosure relates to a terminal equipment comprising a device configured for implementing all or part of the steps of the above-mentioned method for improving the quality of service for at least one terminal equipment as implemented by a terminal (in any of the different embodiments discussed above).

### 4. LIST OF FIGURES

Other features and advantages of embodiments shall appear from the following description, given by way of indicative and non-exhaustive examples and from the appended drawings, of which:
- Figure 1 illustrates a terminal equipment connected to a radiocommunications network comprising a plurality of boosted areas according to one embodiment of the present disclosure;
- Figure 1a illustrates a terminal equipment connected to a radiocommunications network comprising a plurality of boosted areas according to another embodiment of the present disclosure;
- Figure 2 illustrates the steps of a method for improving the quality of service for the terminal equipment of Figure 1 according to one embodiment of the present disclosure;
- Figure 2a details the step of obtaining a set of initial parameters of the method of Figure 2 according to one embodiment of the present disclosure;
- Figure 2b details the step of obtaining a grant decision for accessing requested services of the method of Figure 2 according to one embodiment of the present disclosure;
- Figure 2c details the step of obtaining a set of dynamic parameters of the method of Figure 2 according to one embodiment of the present disclosure;
- Figure 3 illustrates the steps of a method for improving the quality of service for the terminal equipment of Figure 1a according to another embodiment of the present disclosure;
- Figure 3a details the step of obtaining a set of initial parameters of the method of Figure 3 according to one embodiment of the present disclosure;
- Figure 3b details the step of obtaining a grant decision for accessing requested services of the method of Figure 3 according to one embodiment of the present disclosure;
- Figure 4 illustrates an example of the structural blocks that can be implemented in the device of Figure 1 for executing the method of Figure 2; and
- Figure 5 illustrates an example of the structural blocks that can be implemented in the device of Figure 1a for executing the method of Figure 3.

### 5. DETAILED DESCRIPTION

In all of the Figures of the present document, the same numerical reference signs designate similar elements and steps.

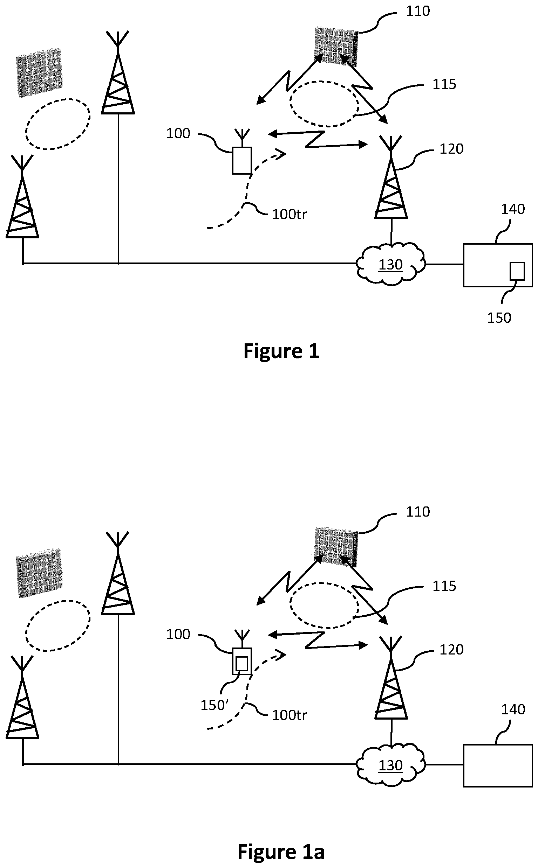

Referring now to **Figure 1****,** we describe a terminal equipment 100 (e.g. a smartphone, a tablet or a personal computer with a wireless connectivity) connected to a radiocommunications network comprising a plurality of boosted areas 115 according to one embodiment of the present disclosure.

The radiocommunications network is a cellular network, e.g. following a 3GPP standards like a 5G, or a 3GPP LTE Pro and their future evolutions. However, in other embodiments, the radiocommunications network may be a LAN, a Home-area networks, a LiFi network, or any "Beyond 5G" standards. It is noted that the method according to the present disclosure is frequency agnostic. It means that it does not work only for a specific frequency band, but rather for any frequency band.

Back to Figure 1, the terminal equipment 100 is moving along a trajectory 100tr in a coverage area of the radiocommunications network. The terminal equipment 100 is communicatively connected to the radiocommunications network through a wireless link with at least one base station 120, which is in turn communicatively connected to the core network 130.

The radiocommunications network comprises RISs 110. As discussed in the "Technological background" part, RISs 110 are artificial surfaces made of hundreds of nearly passive (sometimes, also active) reflective elements that can be programmed and controlled to realize dynamic transformations of the radio propagation environment so that boosted areas 115 are obtained. Such boosted areas 115 are further discussed in the above-mentioned paper by E. Calvanese Strinati et al.

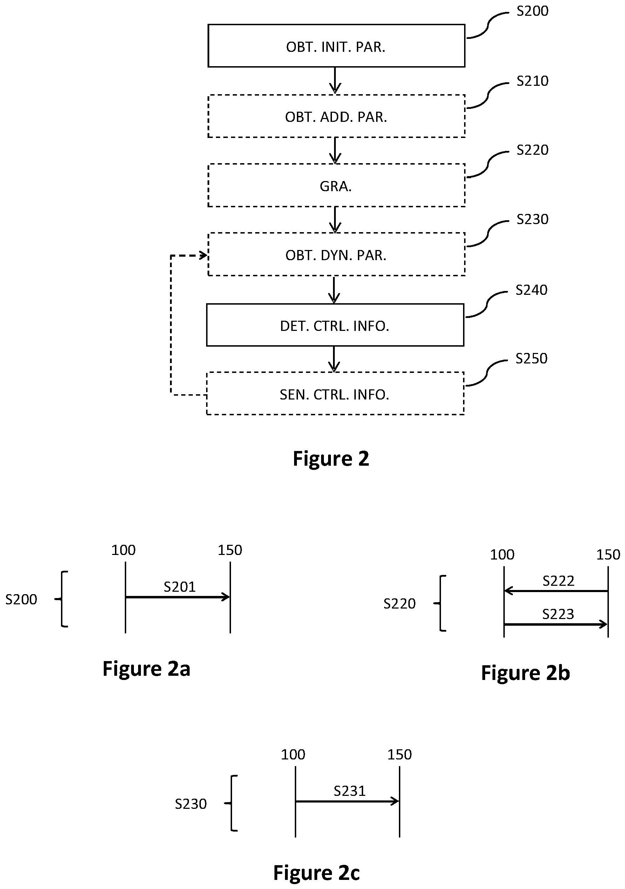

In order to improve the quality of service, or to achieve a predetermined target quality of service, for the terminal equipment 100 in such time and/or location varying communication conditions, a management server 140 is connected to the core network 130 of the radiocommunications network. More particularly, the management server 140 implements an electronic device 150 that executes the method for improving the quality of service for the terminal 100 as disclosed below in relation with Figures 2, 2a, 2b and 2c (according to any of the embodiments disclosed below in relation with Figures 2, 2a, 2b and 2c). Accordingly, in the embodiment of Figure 1, the method according to the present disclosure is executed in a **centralized mode.** In particular, in configurations wherein a plurality of terminal equipment 100 is connected to the radiocommunications network, the device 150 can improve the quality of service for the plurality of terminal equipment 100 in an efficient way by having the centralized knowledge of different information belonging to different terminal equipment 100.

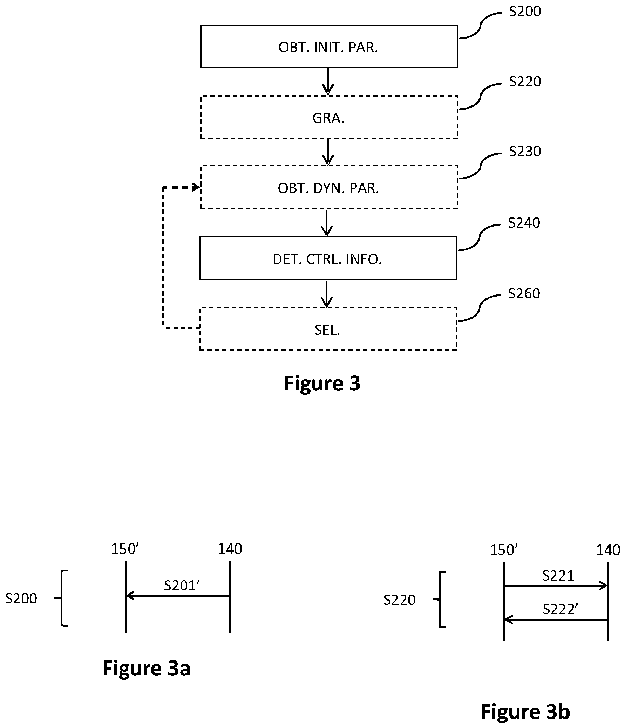

Conversely, in the embodiment of **Figure 1a****,** the method for improving the quality of service for the terminal 100 according to the present disclosure is rather directly executed by the terminal 100. In that perspective, the terminal 100 comprises an electronic device 150' that executes the method for improving the quality of service for the terminal 100 as disclosed below in relation with Figures 3, 3a and 3b (according to any of the embodiments disclosed below in relation with Figures 3, 3a and 3b). Accordingly, in the embodiment of Figure 1a, the method according to the present disclosure is executed in a **distributed mode,** each terminal equipment 100 implementing the present method being in charge of the improvement of its own quality of service. This allows improving the reactivity in the execution of the present method, as well as the local complexity of the optimization to implement the method.

However, in other embodiments, there is both a management server 140 implementing the electronic device 150, and all or part of the terminal equipment 100 that implement an electronic device 150'. In such **hybrid mode,** the management server 140 can manage according to the centralized mode at least the terminal equipment 100 that are not equipped with an electronic device 150' while the terminal equipment 100 equipped with an electronic device 150' implement the method according to the distributed mode. Alternatively, the management server 140 can also manage the terminal equipment 100 that are equipped with an electronic device 150', e.g. when the centralized mode has priority on the distributed mode, or by taking into account for the control information determined by the terminal equipment 100 for performing an overall optimization as further discussed below.

Referring now to **Figure 2****,** we describe a method for improving the quality of service for the terminal equipment 100 according to one embodiment of the present disclosure. Such embodiment corresponds to the **centralized mode** discussed above in relation with Figure 1.

More particularly, in a step **S200,** the device 150 obtains a set of initial parameters characterizing:
- the configuration of the boosted areas 115 in the radiocommunications network;
- the expected trajectory 110tr of the terminal equipment 100 in a coverage area of the radiocommunications network; and
- the needs of the terminal equipment 100 in term of requested services to be obtained through the connection to the radiocommunications network.

For instance, the device 150 receives **(step S201** in **Figure 2a****),** from the terminal equipment 100, the expected trajectory 100tr and the requested services. Such expected trajectory 100tr is for instance determined by a GPS (for "Global Positioning System") device of the terminal equipment 100 based on a destination entered by the user of the terminal equipment 100.

Thus, taking into account both the configuration of the network and the expected trajectory 110tr of the terminal equipment 100 in addition of its needs in term of requested services (e.g. data rate, energy consumption, latency, secrecy, etc.) allows optimizing the overall quality of service for the terminal 100, even when moving. This allows for instance meeting a predetermined target in term of quality of service in time and/or location varying communication conditions.

Back to Figure 2, in a step **S210,** the device 150 obtains a set of additional parameters characterizing the resources of the radiocommunications network, e.g. the available frequency bandwidth in the network, the available access points (APs), etc.

In a step **S220,** based on the initial parameters and on the additional parameters, the device 150 decides if to grant the requested services to the terminal equipment 100, and with which level of quality of service (e.g. what quality of service can be guaranteed). Correspondingly, the terminal equipment 100 informs the device 150 that it accepts the granted service. Alternatively, the terminal equipment 100 decides to drop the service request.

For instance, when the device 150 has decided to grant the requested services to the terminal equipment 100 and with which level of service quality, the device 150 sends **(step S222** in **Figure 2b****)** to the terminal equipment 100 a message representative of a grant decision for accessing the requested services. The subsequent steps of the method (i.e. steps S230, S240 and S250) are executed only if the terminal equipment 100 accepts the granted service. For instance, the device 150 executes the subsequent steps S230, S240 and S250 of the method responsive to receiving a message, in a step **S223,** sent by the terminal equipment 100, informing of the terminal equipment 100 accepting the granted service.

However, in other embodiments, the step S220 is not executed and the subsequent steps S230, S240 and S250 of the method are executed in any case.

Back to Figure 2, in a **step S230,** the device 150 obtains a set of dynamic parameters characterizing:
- the effective performance of the radiocommunications network and/or effective performance of the terminal equipment 100 relating to the connection to the radiocommunications network.

More particularly, by "effective" performance of the radiocommunications network we mean the actual performance of the radiocommunications network during its operation at the time of obtaining the dynamic parameters. Such effective performance of the radiocommunications network comprise e.g. the characteristics of the radio channels, the effective data traffic in the radiocommunications network, etc.

In the same way, by "effective" performance of the terminal equipment 100 we mean the actual performance of the terminal equipment 100 when connected to the radiocommunications network and at the time of obtaining the dynamic parameters. Such effective performance of the terminal equipment comprise e.g. the battery level of the terminal equipment 100, the data rate effectively experienced by the terminal equipment, etc.

Thus, the dynamic behavior of the connection of the terminal equipment 100 to the radiocommunications network, e.g. due to the move of the terminal equipment 100, is taken into account for improving the quality of service for the terminal equipment 100.

For instance, the device 150 receives **(step S231** in **Figure 2c****),** from the terminal equipment 100, the effective performance of the terminal equipment 100.

Back to Figure 2, in a **step S240,** based on:
- the set of initial parameters;
- the additional parameters; and
- the set of dynamic parameters,
the device 150 determines one (or more) control information allowing to improve the quality of service for the terminal equipment 100 by acting on the trajectory 100tr of the terminal equipment and/or the operation of the radiocommunications network. Such determination relies e.g. on an optimization algorithm executed by the device 150. For instance, the goal of such optimization is to achieve a predetermined target quality of service for the terminal equipment 100.

For instance, the control information belongs to the group comprising:
- at least one boosted path corresponding to a selection of a chaining of boosted areas 115 that matches the trajectory 110tr of the terminal equipment 100;
- a service scheduling (e.g. by scheduling the services requiring the highest data rates at time wherein the terminal equipment 100 is expected to be located in a boosted area 115);
- at least one updated trajectory 110tr for the terminal equipment (e.g. for having the terminal equipment 100 going toward areas with better radio indicators, e.g. in boosted areas 115, when needed for addressing the requested services); and
- a combination of all or part of the above listed control information.

Thus, the quality of service for the terminal equipment 100 can be optimized by acting both on the network side or on the terminal equipment 100 side, e.g. by acting on its trajectory 100tr. For that, in a step **S250,** the device 150 sends to the terminal equipment 100 the control information. However, in some embodiments, the step 250 is not implemented, e.g. when the control information relates only to an optimization on the network side.

In some embodiments, the control information is determined based only on the set of initial parameters (i.e. the steps S210 and S230 are not executed), or on the set of initial parameters in combination with the additional parameters (i.e. the step S230 is not executed). Indeed, even is this does not allow tracking the dynamic behavior of the environment, this still allows improving the overall quality of service for the terminal, even when moving by taking into account for the expected trajectory 100tr.

In some embodiments, the step S200 and/or the step S230 is executed for a plurality of terminal equipment 100 connected to the radiocommunications network. This delivers a corresponding plurality of sets of initial parameters and/or a corresponding plurality of sets of dynamic parameters. The control information allowing to improve the quality of service for a given terminal equipment 100 is determined base at least on the plurality of sets of initial parameters and/or the plurality of sets of dynamic parameters. Thus, the quality of service for the plurality of terminal equipment 100 is improved through a centralized optimization by taking into account for all the constraints relating to all the terminal equipment 100 of the plurality.

Back to Figure 2, the step S230, the step S240 and, when relevant, the step S250 are executed periodically. Thus, the changes relating to the dynamic behavior of the environment are tracked and taken into account for improving the quality of service for the terminal equipment 100. However, in other embodiments, such periodical update is not executed. This allows reducing e.g. the power consumption of the terminal equipment 100, the complexity of the method, the control signaling, etc.

Referring now to **Figure** 3, we describe a method for improving the quality of service for the terminal equipment 100 according to another embodiment of the present disclosure. Such embodiment corresponds to the **distributed mode** discussed above in relation with Figure 1. In such distributed mode, the method is implemented by the device 150' implemented in the terminal equipment 100 rather than by the device 150 in the management server 140.

More particularly, in step **S200,** the device 150' obtains the set of initial parameters as defined above.

For instance, the device 150' receives **(step S201'** in **Figure 3a****),** from the management server 140, the configuration of the boosted areas 115.

Back to Figure 3, in a step **S220,** the device 150' informs the management server 140 that it accepts the service granted by the management server 140. For instance, the device 150':
- sends (step **S221** in **Figure 3b****),** to the management server 140, a request for accessing to the requested services;
- receives (step **S222'** in Figure 3b), from the management server 140, a message representative of a grant decision for accessing the requested services.

The subsequent steps of the method (i.e. steps S230, S240 and S250) are executed only if the terminal equipment 100 accepts the granted service. However, as discussed above in relation with Figure 1, in some embodiments, the step S220 is not executed and the subsequent steps S230, S240 and S250 of the method are executed in any case.

Back to Figure 3, in **step S230,** the device 150' obtains a set of dynamic parameters.

However, contrary to the centralized case discussed above in relation with Figure 2, in the present case, the dynamic parameters are obtained locally by the terminal equipment 100. In other words, the method in the distributed mode is implemented by the terminal equipment 100 based on its local evaluation of the dynamic behavior of the environment, e.g. without receiving some dynamic parameters from the management server 140 through the network. Consequently, the dynamic parameters relate in that case to the effective performance of the terminal equipment 100 at the time to obtain such parameters, e.g. the battery level of the terminal equipment 100, the data rate effectively experienced by the terminal equipment 100, etc.

As discussed above in relation with Figure 2, in some embodiments the control information is determined based only on the set of initial parameters (i.e. the step S230 is not executed). Indeed, even if this does not allow tracking the dynamic behavior of the environment, this still allows improving the overall quality of service for the terminal equipment 100, even when moving by taking into account for the expected trajectory 100tr.

Back to Figure 3, in step 240, the device 150' determines one (or more) control information allowing to improve the quality of service for the terminal equipment 100. In the present distributed mode, the control information relates to actions that can be performed on the terminal equipment 100, e.g. by updating the trajectory 110tr and/or by scheduling the services from the terminal equipment 100 point of view (e.g. scheduling the services requiring the highest data rates at time wherein the terminal equipment 100 is expected to be located in a boosted area 115).

However, in some embodiment corresponding to the hybrid mode described above in relation with Figure 1, both the management server 140 and some terminal equipment 100 execute the present method. In that case, the terminal equipment 100 that execute the method on their own can determine in step S240 control information that correspond to an optimization of the radiocommunications network, e.g. through the determination of one (or more) boosted path corresponding to a selection of a chaining of boosted areas 115 that matches the trajectory 110tr of the considered terminal equipment 100. In that case, the considered terminal equipment 100 implements an additional step for sending the control information to the management server 140 for executing the actions corresponding to the received control information (e.g. the chaining of the boosted areas 115). In such hybrid configuration, the control information determined by some terminal equipment 100 can affect the quality of service for other terminal equipment 100, in particular when an optimization of the radiocommunications network is required. For achieving an overall optimization for all the terminal equipment 100, in some embodiments, the management server 140 may implement a further step of global optimization for determining optimized control information to apply to the network side based on the control information received from the terminal equipment 100. Such global optimization can implement e.g. game theoretical algorithms.

Back to Figure 3, in a step S260, the device 150' selects, when relevant, one of the control information determined during step S240. However, in some embodiments, such selection is not implemented (e.g. when only one control information has been determined, or when all the determined control information apply).

Back to Figure 3, the step S230, the step S240 and, when relevant, the step S260 are executed periodically. Thus, the changes relating to the dynamic behavior of the environment are tracked and taken into account for improving the quality of service for the terminal equipment 100.

The method as disclosed above in relation with Figures 2 and 3 (in any of the embodiments discussed above in relation with Figures 2 and 3) can be executed for each terminal equipment 100 of a plurality of terminal equipment 100 for improving the quality of service for each of those terminal equipment 100.

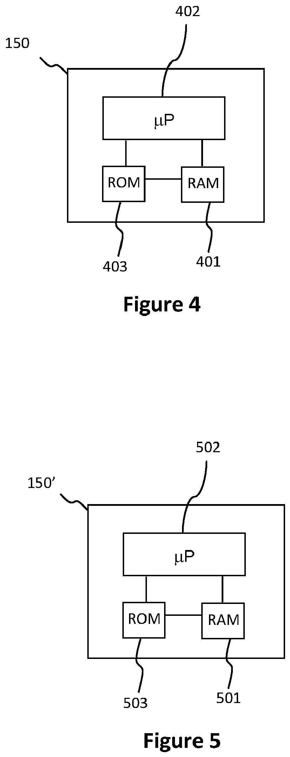

Referring now to **Figure 4****,** we describe an example of the structural blocks implemented in the device 150.

More particularly, in order to be able to implement all or part of the steps of the method for improving the quality of service for one (ore more) terminal equipment 100 as executed by the management server 140 (according to any of the embodiments disclosed above), in some embodiments the device 150 comprises:
- a non-volatile memory 403 (e.g. a read-only memory (ROM), a hard disk, a flash memory, etc.);
- a volatile memory 401 (e.g. a random-access memory or RAM) and a processor 402.

The non-volatile memory 403 is a non-transitory computer-readable carrier medium. It stores executable program code instructions, which are executed by the processor 402 in order to enable implementation of some steps of the method described above (method for improving the quality of service for one (ore more) terminal equipment 100) in the various embodiment disclosed above.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

The steps of the method for improving the quality of service for one (ore more) terminal equipment 100 as executed by the device 150 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 5****,** we describe an example of the structural blocks implemented in the device 150'.

More particularly, in order to be able to implement all or part of the steps of the method for improving the quality of service for one (ore more) terminal equipment 100 as executed by as executed by the terminal equipment 100 (according to any of the embodiments disclosed above), in some embodiments the device 150' comprises:
- a non-volatile memory 503 (e.g. a read-only memory (ROM), a hard disk, a flash memory, etc.);
- a volatile memory 501 (e.g. a random-access memory or RAM) and a processor 502.

The non-volatile memory 503 is a non-transitory computer-readable carrier medium. It stores executable program code instructions, which are executed by the processor 502 in order to enable implementation of some steps of the method described above (method for improving the quality of service for one (ore more) terminal equipment 100) in the various embodiment disclosed above.

Upon initialization, the aforementioned program code instructions are transferred from the non-volatile memory 503 to the volatile memory 501 so as to be executed by the processor 502. The volatile memory 501 likewise includes registers for storing the variables and parameters required for this execution.

The steps of the method for improving the quality of service for one (ore more) terminal equipment 100 as executed by the device 150' may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

## Claims

1. Method for improving the quality of service for at least one terminal equipment (100) connected to a radiocommunications network comprising a plurality of boosted areas (115),
**characterized in that** an electronic device (150, 150') executes:
- obtaining (S200) a set of initial parameters characterizing: the configuration of the boosted areas in said radiocommunications network, the expected trajectory of the terminal equipment in a coverage area of the radiocommunications network, and the needs of the terminal equipment in term of requested services to be obtained through the connection to the radiocommunications network; and
- determining (S240), based at least on the set of initial parameters, at least one control information allowing to improve the quality of service for the terminal equipment by acting on the trajectory of the terminal equipment and/or the operation of the radiocommunications network.

2. Method according to claim 1, wherein the control information belongs to the group comprising:
- at least one boosted path corresponding to a selection of a chaining of boosted areas that matches the trajectory of the terminal equipment;
- a service scheduling;
- at least one updated trajectory for the terminal equipment; and
- a combination of all or part of the above listed control information.

3. Method according to claim 1 or 2, wherein the electronic device executes:
- obtaining (S230) a set of dynamic parameters characterizing: effective performance of the radiocommunications network, and/or effective performance of the terminal equipment relating to the connection to the radiocommunications network; and wherein said determining at least one control information is also based on the set of dynamic parameters.

4. Method according to claim 3, wherein said obtaining a set of dynamic parameters and said determining at least one control information is executed periodically.

5. Method according to any of the claims 1 to 4, wherein the electronic device (150) is implemented in a management server (140) connected to the radiocommunications network,
and wherein the electronic device executes:
- sending (S250) to the terminal equipment said at least one control information.

6. Method according to claim 5, wherein said obtaining a set of initial parameters comprises:
- receiving (S201), from the terminal equipment, said expected trajectory and said requested services.

7. Method according to claim 5 or 6 in that it depends on claim 3, wherein said obtaining a set of dynamic parameters comprises:
- receiving (S231), from the terminal equipment, said effective performance of the terminal equipment.

8. Method according to any of the claims 5 to 7, wherein said obtaining a set of initial parameters and/or said obtaining a set of dynamic parameters is executed for a plurality of terminal equipment connected to the radiocommunications network, delivering a corresponding plurality of sets of initial parameters and/or a corresponding plurality of sets of dynamic parameters,
and wherein said at least one control information allowing to improve the quality of service for the terminal equipment is determined base at least on the plurality of sets of initial parameters and/or the plurality of sets of dynamic parameters.

9. Method according to any of the claims 5 to 8, wherein the electronic device executes:
- obtaining (S210) a set of additional parameters characterizing the resources of the radiocommunications network;
and wherein said determining at least one control information is also based on the set of additional parameters.

10. Method according to any of the claims 5 to 9, wherein the electronic device executes:
- sending (S222), to the terminal equipment, a message representative of a grant decision for accessing the requested services;
wherein said determining at least one control information and said sending said at least one control information are executed only if the terminal equipment accepts the granted service.

11. Method according to any of the claims 1 to 4, wherein the electronic device (150') is implemented in the terminal equipment (100),
and wherein said obtaining a set of initial parameters comprises:
- receiving (S201'), from a management server connected to the radiocommunications network, said configuration of the boosted areas.

12. Method according to claim 11, wherein the electronic device executes:
- sending (S221), to the management server, a request for accessing to the requested services;
- receiving (S222'), from the management server, a message representative of a grant decision for accessing the requested services;
wherein said determining at least one control information are executed only if the terminal equipment accepts the granted service.

13. Computer program product comprising program code instructions for implementing a method according to any of the claims 1 to 12.

14. Device (150, 150') for improving the quality of service for at least one terminal equipment (100) connected to a radiocommunications network comprising a plurality of boosted areas (115),
**characterized in that** it comprises a processor (402, 502) or a dedicated computing machine configured for:
- obtaining a set of initial parameters characterizing: the configuration of the boosted areas in said radiocommunications network, the expected trajectory of the terminal equipment in a coverage area of the radiocommunications network, and the needs of the terminal equipment in term of requested services to be obtained through the connection to the radiocommunications network; and
- determining, based at least on the set of initial parameters, at least one control information allowing to improve the quality of service for the terminal equipment by acting on the trajectory of the terminal equipment and/or the operation of the radiocommunications network.

15. Terminal equipment (100) comprising a device according to claim 14.
